(19) **Europäisches Patentamt / European Patent Office / Office européen des brevets**

(11) **EP 4 201 672 A1**

(12) # EUROPEAN PATENT APPLICATION
published in accordance with Art. 153(4) EPC

(43) Date of publication:
**28.06.2023 Bulletin 2023/26**

(21) Application number: **21858123.9**

(22) Date of filing: **27.07.2021**

(51) International Patent Classification (IPC):
**B32B 27/20** (2006.01) **B32B 27/36** (2006.01)
**C08L 67/00** (2006.01) **C08L 69/00** (2006.01)
**C08J 5/18** (2006.01) **B42D 25/30** (2014.01)
**C08K 3/04** (2006.01) **C08K 3/22** (2006.01)

(52) Cooperative Patent Classification (CPC):
**B32B 27/20; B32B 27/36; B42D 25/30; C08J 5/18;
C08K 3/013; C08K 3/04; C08K 3/22; C08L 67/00;
C08L 67/02; C08L 67/04; C08L 69/00**

(86) International application number:
**PCT/JP2021/027661**

(87) International publication number:
**WO 2022/038974 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.08.2020 JP 2020137706**

(71) Applicant: **MITSUBISHI GAS CHEMICAL
COMPANY, INC.**
**Chiyoda-ku**
**Tokyo 100-8324 (JP)**

(72) Inventors:
• **OHNO Shotaro**
  **Tokyo 125-0051 (JP)**
• **TAKEDA Masahide**
  **Tokyo 125-0051 (JP)**
• **NAKAJIMA Mamoru**
  **Tokyo 125-0051 (JP)**
• **TOMITA Keisuke**
  **Tokyo 125-0051 (JP)**
• **SUZUKI Kentaro**
  **Hiratsuka-shi, Kanagawa 254-0016 (JP)**

(74) Representative: **Hoffmann Eitle
Patent- und Rechtsanwälte PartmbB
Arabellastraße 30
81925 München (DE)**

(54) **RESIN COMPOSITION, RESIN SHEET, MULTILAYER BODY AND CARD**

(57)　Provided are a resin composition which can provide a resin sheet having excellent light shielding properties with titanium oxide sufficiently dispersed, as well as a resin sheet, a multilayered article and a card produced therefrom. The resin composition comprising a polycarbonate resin in an amount of 30 to 95 parts by mass, and titanium oxide in an amount of 5 to 40 parts by mass, wherein the titanium oxide has an average primary particle size of 0.22 to 0.26 $\mu$m based on measurement of an image observed by a scanning electron microscope (SEM), and wherein the titanium oxide has an Si content of 1.0 to 1.8 % by mass and an Al content of 1.6 to 2.2 % by mass based on measurement by X-ray fluorescence (XRF) analysis after firing at 700°C for 2 hours.

[Figure 2]

**Description**

[Technical Field]

The present disclosure relates to a resin composition, a resin sheet, a multilayered article and a card.

[Background Art]

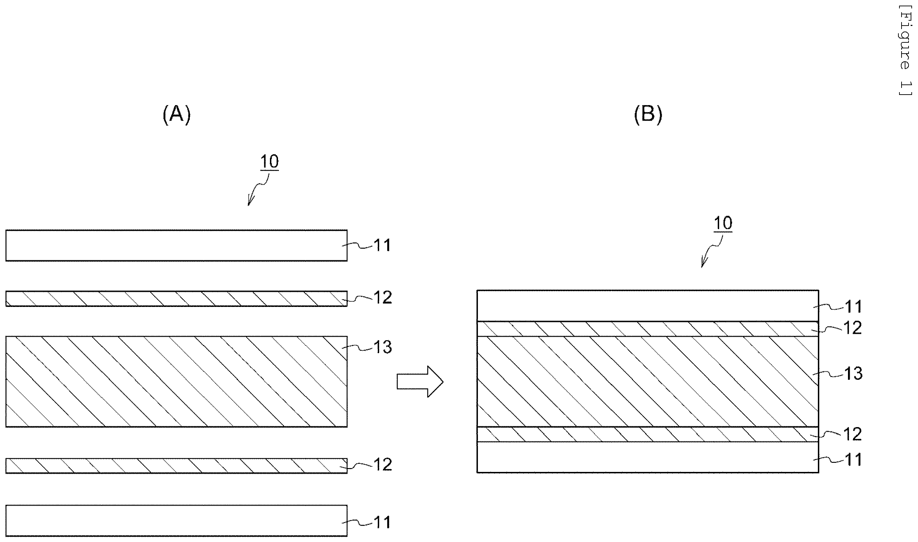

Conventionally, for security cards such as ID cards, e-passports, and contactless IC cards, cards using a resin sheet or a multilayered article including a resin sheet have begun to be used.
Here, as an example of the layer structure of security cards, a multilayered article shown in Figure 1 is known. In Figures 1 (A) and 1 (B), a multilayered article 10, an overlay layer (transparent resin sheet) 11, and white core layers 12 and 13 are shown. The multilayered article 10 may further include a laser marking layer and the like. Further, an IC chip, an antenna, etc., are usually incorporated in or between the white core layers 12 and 13. Use of the white core layers 12 and 13 having light shielding properties allows the IC chip, the antenna, etc., to be invisible from the outside of the card. Each of these layers (Figure 1 (A)) is bonded by, for example, hot pressing to make a multilayered article (Figure 1 (B)). Such a security card is described in, for example, Patent Literature 1.

[Citation List]

[Patent Literature]

[Patent Literature 1] International Publication No. WO 2018/163889

[Summary of Invention]

[Technical Problem]

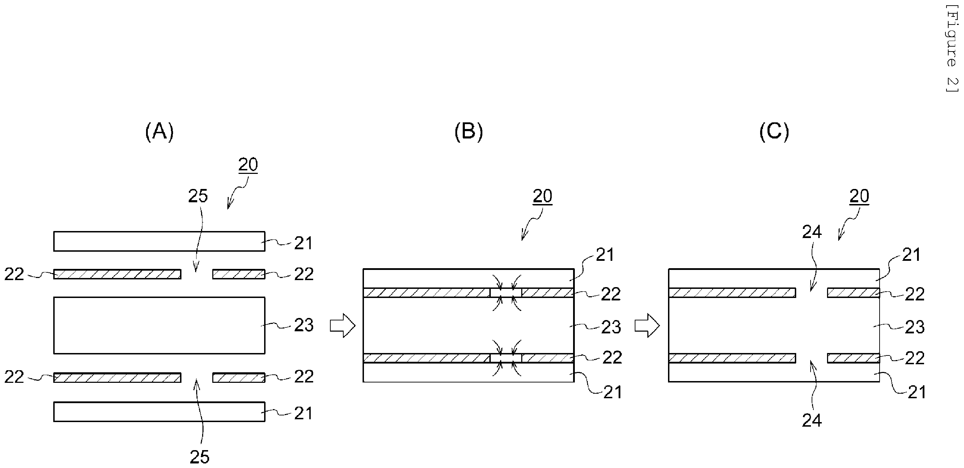

It has been known that although the security card described in Patent Literature 1 is useful, titanium oxide that is compounded to achieve light shielding properties may agglomerate in some cases. The agglomeration of titanium oxide causes appearance defects due to asperities of a resin sheet or a card product.
In recent years, a security card having a clear window has also been studied. An example of the security card (multilayered article) having a clear window is shown in Figure 2. In Figures 2 (A) to 2 (C), security card (multilayered article) 20, overlay layer (transparent resin sheet) 21, white core layer 22, transparent resin sheet 23, and clear window 24 are shown. Here, clear window 24 is provided on the security card for, for example, forgery prevention and improved design, and is a transparent window introduced into a part of the card surface of the card. Example of the method for producing a multilayered article having a clear window 24 include arranging white core layer 22 provided with an opening (a region with absence of white core layer) 25 when each layer is laminated (Figure 2 (A)), and bonding each layer by hot pressing. Thereby, at the time of hot pressing, a part of the transparent resin of the overlay layer (transparent resin sheet) 21 and transparent resin sheet 23 flows into opening 25 (Figure 2 (B)), so that clear window 24 is formed (Figure 2 (C)). In the case where the clear window is produced by the method, it is necessary to make white core layer 22 thin, such that opening 25 is sufficiently filled with the transparent resin. However, a thinned white core layer 22 may result in light shielding properties inferior to those originally required for white core layer 22. In particular, in order to provide clear window 24, the layer adjacent to white core layer 22 (layer 23 in Figure 2) cannot be a white core layer, and is required to be transparent resin sheet 23. In other words, with poor light shielding properties of white core layer 22, an IC chip and an antenna incorporated inside a security card (multilayered article) become also seen through. Although increase in the amount of titanium oxide compounded may be conceivable as means for improving the light shielding properties, the increase tends to further cause the problem of agglomeration of titanium oxide.
An object of the present invention is to solve such a problem, i.e., to provide a resin composition which can provide a resin sheet having excellent light shielding properties with titanium oxide sufficiently dispersed, as well as a resin sheet, a multilayered article and a card produced therefrom.

[Solution to Problem]

As a result of study of the problem by the present inventor, the problem has been solved by the following means.

<1> A resin composition comprising a polycarbonate resin in an amount of 30 to 95 parts by mass, and titanium oxide in an amount of 5 to 40 parts by mass, wherein the titanium oxide has an average primary particle size of 0.22

to 0.26 μm based on measurement of an image observed by a scanning electron microscope (SEM), and wherein the titanium oxide has an Si content of 1.0 to 1.8 % by mass and an Al content of 1.6 to 2.2 % by mass based on measurement by X-ray fluorescence (XRF) analysis after firing at 700°C for 2 hours.

<2> The resin composition according to item <1>, wherein the titanium oxide has an organic substance layer on a surface.

<3> The resin composition according to item <1> or <2>, wherein the titanium oxide has a difference between the Si content measured by X-ray fluorescence (XRF) analysis and the Si content measured by X-ray fluorescence (XRF) analysis after firing at 700°C for 2 hours of 0.3 to 0.8 % by mass.

<4> The resin composition according to any one of items <1> to <3>, wherein the titanium oxide has a mass ratio (Si/Al) between the Si content and the Al content measured by X-ray fluorescence (XRF) analysis after firing at 700°C for 2 hours of 0.5 to 1.0.

<5> The resin composition according to any one of items <1> to <4>, further comprising a polyester at a proportion of 0.5 to 47.5 parts by mass.

<6> The resin composition according to item <5>, wherein the polyester comprises a constitutional unit derived from a lactone compound.

<7> The resin composition according to item <5> or <6>, wherein the polyester comprises a constitutional unit derived from terephthalic acid, a constitutional unit derived from ethylene glycol, and a constitutional unit derived from cyclohexane dimethanol.

<8> The resin composition according to any one of items <1> to <7>, wherein the content of the titanium oxide is 20 to 40 parts by mass.

<9> The resin composition according to any one of items <1> to <8>, further comprising a colorant other than titanium oxide at a proportion of 5 to 150 ppm by mass in the resin composition.

<10> The resin composition according to item <9>, wherein the other colorant comprises a colorant having a maximum absorption in the wavelength range of 450 to 650 nm.

<11> The resin composition according to item <9>, wherein the other colorant comprises carbon black.

<12> The resin composition according to item <9> or <10>, wherein the other colorant comprises a dye.

<13> The resin composition according to any one of items <1> to <12>, further comprising an antioxidant at a proportion of 0.01 to 0.2 % by mass in the resin composition.

<14> The resin composition according to any one of items <1> to <13>, further comprising an antistatic agent.

<15> The resin composition according to any one of items <1> to <14>, being used for a card.

<16> A resin sheet formed from the resin composition according to any one of items <1> to <15>.

<17> The resin sheet according to item <16>, having a thickness of 20 to 2000 μm.

<18> The resin sheet according to item <16> or <17>, having a total light ray transmittance of 0 to 20%.

<19> The resin sheet according to any one of items <16> to <18>, wherein at least one of the faces of the resin sheet has a surface roughness Ra of 0.4 to 3.0 μm.

<20> The resin sheet according to any one of items <16> to <19>, wherein the resin sheet has a first face with a surface roughness Ra of 0.4 to 3.0 μm and a second face with a surface roughness smaller than a surface roughness of the first face by 0.1 to 2.5 μm.

<21> A multilayered article comprising the resin sheet according to any one of items <16> to <20>.

<22> The multilayered article according to item <21>, having a total thickness of 0.2 to 2.0 mm.

<23> The multilayered article according to item <21> or <22>, having at least one layer comprising a laser coloring agent.

<24> The multilayered article according to any one of items <21> to <23>, further comprising a layer containing a colorant that emits visible light by irradiation with UV light or infrared light.

<25> The multilayered article according to item <24>, further comprising a layer containing a colorant that emits visible light having a wavelength different from that of the colorant that emits visible light, by irradiation with UV light or infrared light.

<26> A card comprising the resin sheet according to any one of items <16> to <20>, or the multilayered article according to any one of items <21> to <25>.

<27> The card according to item <26>, which is a security card.

[Advantageous Effect of Invention]

According to the present invention, a resin composition which can provide a resin sheet having excellent light shielding properties with titanium oxide sufficiently dispersed, as well as a resin sheet, a multilayered article and a card produced therefrom, can be provided.

[Brief Description of Drawings]

[Figure 1] Figure 1 is a schematic view showing the layer structure of a conventional security card as an example.
[Figure 2] Figure 2 is a schematic view showing the layer structure of a security card (multilayered article) having a clear window as an example.
[Figure 3] Figure 3 is a schematic view for illustrating the layer structure of a security card (multilayered article) having a clear window.

[Description of Embodiments]

Hereinafter, embodiments of the present invention (hereinafter, simply referred to as "the present embodiments") will be described in detail. The following embodiments are examples for explaining the present invention, and the present invention is not limited thereto.
In the present specification, the numerical values described before and after "to" are used as the lower limit value and the upper limit value.
In the present specification, various physical property values and characteristic values are those at 23°C, unless otherwise specified.
In the present specification, the "sheet" and "multilayered article" refer to "formed article" having a thin thickness relative to the length and width, being generally a flat formed article including "film". Further, in the present specification, the "sheet" may include a single layer or a multilayer, and a single layer is preferred.
In the present specification, "part by mass" indicates a relative amount of a component, and "% by mass" indicates an absolute amount of a component.
The resin composition in the present embodiment comprises a polycarbonate resin in an amount of 30 to 95 parts by mass, and titanium oxide in an amount of 5 to 40 parts by mass, the titanium oxide having an average primary particle size of 0.22 to 0.26 $\mu$m based on measurement of an image observed by a scanning electron microscope (SEM), the titanium oxide having an Si content of 1.0 to 1.8 % by mass and an Al content of 1.6 to 2.2 % by mass based on measurement by X-ray fluorescence (XRF) analysis after firing at 700°C for 2 hours. With such a constitution, a resin composition which can provide a resin sheet having excellent light shielding properties with titanium oxide sufficiently dispersed is obtained. In particular, a resin composition which can provide a resin sheet having excellent light shielding properties with titanium oxide sufficiently dispersed is obtained even in the case where the resin sheet has a thin thickness, and/or the content proportion of titanium oxide in the resin sheet is high.
It is presumed that the mechanism is based on the specified type of titanium oxide for use. In other words, firstly, it is presumed that use of titanium oxide having the average primary particle size has suppressed the agglomeration of titanium oxide. Secondly, titanium oxide for use in the field of resin sheets usually has a surface including an inorganic oxide layer such as silica layer and alumina layer and an organic layer such as silicone layer in order. According to the study by the present inventor, it is presumed that the dispersion of titanium oxide may be improved by reduction in the area of silica layer. Accordingly, the titanium oxide for use in the present embodiment has a less amount of Si after firing than titanium oxide conventionally used in the technical field of the present embodiment. Here, when the titanium oxide having the constitution is fired, the organic silicone layer of the surface is burnt with leaving almost no residue. However, in the case of having a silica layer inside, the Si component remains. It is therefore presumed that the titanium oxide for use in the present invention has a less amount of silica layer as inorganic oxide layer. It is presumed that based on the results, the resin composition in the present embodiment has achieved success in improvement in dispersion of titanium oxide.

<Polycarbonate resin>

The resin composition in the present embodiment comprises a polycarbonate resin. The polycarbonate resin serves a function as substrate of a resin sheet.
The polycarbonate resin is not particularly limited as long as the molecular backbone contains a constitutional unit -[O-R-OCO]-containing a carbonic acid ester bond (R is a hydrocarbon group (for example, an aliphatic group, an aromatic group, or one containing both of an aliphatic group and an aromatic group, having a linear structure or a branched structure)), and various polycarbonate resins may be used.
In the present embodiment, an aromatic polycarbonate resin is preferred, and a bisphenol polycarbonate resin is more preferred. The bisphenol polycarbonate resin refers to a polycarbonate resin of which 80 mol% or more, preferably 90 mol% or more of the constitutional units are carbonate constitutional units of bisphenol and/or derived from the derivative thereof.

It is preferable that the bisphenol polycarbonate resin be a bisphenol A polycarbonate resin.

The molecular weight of the polycarbonate resin is not particularly specified. Usually, the polycarbonate resin having a viscosity average molecular weight of 10000 to 50000, which is a converted value from the viscosity of a solution measured at a temperature of 25°C, with use of methylene chloride as solvent, may be used without problem. The lower limit value of the viscosity average molecular weight is preferably 20000 or more, more preferably 21000 or more, and still more preferably 25000 or more. The viscosity average molecular weight is preferably 35000 or less, more preferably 32000 or less, and still more preferably 29000 or less. With a viscosity average molecular weight controlled to the lower limit value or more, the viscosity during melt-kneading is improved, so that the uniform dispersibility of the starting materials of the resin composition in an extruder tends to be improved. As a result, occurrence of foreign materials resulting from poor kneading of starting materials tends to be reduced. With a viscosity average molecular weight controlled to the upper limit or less, the formability tends to be improved.

Incidentally, in the present embodiment, two or more polycarbonate resins having a different viscosity average molecular weight may be mixed for use, and in that case, a polycarbonate having a viscosity average molecular weight out of the preferred range may be mixed.

Here, the viscosity average molecular weight [Mv] refers to a value calculated from the Schnell viscosity equation, namely, $\eta = 1.23 \times 10^{-4} Mv^{0.83}$, wherein the intrinsic viscosity [$\eta$] (unit: dL/g) is determined at temperature of 25°C, by a Ubbelohde viscometer using methylene chloride as solvent. The intrinsic viscosity [$\eta$] is a value calculated by the following formula based on the measurement of the specific viscosity [$\eta_{sp}$] at each solution concentration [C] (g/dL).

$$\eta = \lim_{c \to 0} \eta_{sp} \Big/ c$$

Other details of the polycarbonate resin may be referred to the descriptions in paragraphs 0011 to 0020 of Japanese Patent Laid-Open No. 2012-144604 and paragraphs 0014 to 0035 of Japanese Patent Laid-Open No. 2019-002023, as long as not departing from the subject matter of the present embodiment, and the contents thereof are incorporated into the present specification.

The resin composition in the present embodiment comprises a polycarbonate resin preferably at a proportion of 30 to 95 % by mass, more preferably at a proportion of 40 to 90 % by mass, in the resin composition. In particular, in the case where the thickness of the resin sheet is desired to be thinned, a proportion of 41 to 79 % by mass is still more preferred, and a proportion of 55 to 75 % by mass is furthermore preferred.

The resin composition in the present embodiment may comprise one polycarbonate resin alone, or two or more polycarbonate resins. In the case where two or more are contained, it is preferable that the total amount be in the range.

<Titanium oxide>

The resin composition in the present embodiment comprises titanium oxide having an average primary particle size of 0.22 to 0.26 μm based on measurement of an image observed by a scanning electron microscope (SEM), the titanium oxide having an Si content of 1.0 to 1.8 % by mass and an Al content of 1.6 to 2.2 % by mass based on measurement by X-ray fluorescence (XRF) analysis after firing at 700°C for 2 hours. By containing the titanium oxide, a resin sheet excellent in light shielding properties may be provided.

The titanium oxide for use in the present embodiment has an average primary particle size of 0.22 to 0.26 μm based on measurement of an image observed by a scanning electron microscope (SEM). Use of titanium oxide having such an average primary particle size allows the dispersibility of titanium oxide in a resin component (in particular, polycarbonate resin) to be improved, and a resin sheet excellent in light shielding properties to be obtained. The average primary particle size of titanium oxide is preferably 0.23 μm or more. The number average particle size of titanium oxide is preferably 0.25 μm or less. The average primary particle size of titanium oxide is measured according to the description in the following Examples.

The titanium oxide for use in the present embodiment has an Si content of 1.0 to 1.8 % by mass and an alumina content of 1.6 to 2.2 % by mass based on measurement by X-ray fluorescence (XRF) analysis after firing at 700°C for 2 hours. The Si content is preferably 1.2 to 1.6 % by mass. The alumina content is preferably 1.7 to 2.0 % by mass.

A less Si content after firing is achieved by, for example, a thin silica layer. The less Si content tends to improve the dispersibility of titanium oxide in the polycarbonate resin.

The titanium oxide for use in the present embodiment has a mass ratio (Si/Al) between the Si content and the alumina content measured by X-ray fluorescence analysis (XRF) after firing at 700°C for 2 hours of preferably 0.5 to 1.0, more preferably 0.6 to 0.9. With a ratio controlled to the ranges, the dispersibility of titanium oxide in a polycarbonate resin tends to be improved.

Further, the titanium oxide for use in the present embodiment has a difference between the Si content measured by X-ray fluorescence analysis (XRF) and the Si content measured by X-ray fluorescence analysis (XRF) after firing at 700°C for 2 hours (ΔSi) of preferably 0.3 to 0.8 % by mass, more preferably 0.4 to 0.6 % by mass. With a difference controlled to the ranges, the dispersibility of titanium oxide in a polycarbonate resin tends to be improved.

It is preferable that the titanium oxide for use in the present embodiment have an organic substance layer on the surface. Although a polycarbonate resin is usually decomposed with use of titanium oxide having a surface without treatment with an organic substance, the decomposition of a polycarbonate resin may be effectively suppressed with use of titanium oxide having an organic substance layer treated with an organic substance on the surface. In particular, the decomposition of a polycarbonate resin during melt extrusion may be effectively suppressed. Examples of the organic substance (surface treatment agent) include a polymer, and a siloxane compound is preferred. In particular, hydrogen methylsiloxane, dimethylsiloxane, etc. are preferred. The organic substance (surface treatment agent) may be physically adsorbed to the surface of titanium oxide, or may be chemically bonded thereto. Incidentally, the organic substance layer may obviously contain an organic substance without departing from the subject matter of the present embodiment.

In the present embodiment, the titanium oxide is preferably a rutile-type titanium oxide. Use of a rutile-type titanium oxide allows decomposition of the resin composition to be suppressed.

The titanium oxide may further have an inorganic oxide layer such as a silica layer and an alumina layer between the titanium oxide as core and the organic substance layer. The inorganic oxide layer serves to maintain the particulate shape and to suppress decomposition of the resin.

Further, in the present embodiment, it is preferable that the surface of titanium oxide have a thin silica layer as inorganic oxide layer. Such a constitution allows the titanium oxide to have an Si content of 1.0 to 1.8 % by mass and an alumina content of 1.6 to 2.2 % by mass based on measurement by X-ray fluorescence (XRF) analysis after firing at 700°C for 2 hours. Of course, the Si and alumina contents in the titanium oxide based on measurement by X-ray fluorescence (XRF) analysis after firing at 700°C for 2 hours may be adjusted by a method different from the above.

It is preferable that the titanium oxide for use in the present embodiment be in a particulate form.

The resin composition in the present embodiment contains titanium oxide preferably at a proportion of 5 to 40 % by mass, more preferably at a proportion of 10 to 35 % by mass. In particular, in the case where a thin thickness of a resin sheet is desired, a proportion of 20 to 40 % by mass is still more preferred, and a proportion of 25 to 35 % by mass is furthermore preferred.

The resin composition in the present embodiment may contain only one type of titanium oxide alone, or may contain two or more types. In the case of containing two or more types, it is preferable that the total amount be in the range.

<Polyester>

The resin composition in the present embodiment may contain a polyester. By containing a polyester, the resin composition in the present embodiment allows a resin sheet to have improved lamination properties.

The polyester is not particularly limited to be in a specific type, etc., and may be an aliphatic polyester or an aromatic-based polyester containing an aromatic ring.

In the present embodiment, the aliphatic polyester is not particularly limited to be in a specific type, etc., and preferably contains a constitutional unit derived from a lactone compound. Such an aliphatic polyester has an extremely low glass transition temperature and excellent compatibility with a polycarbonate resin, so that addition in a small amount thereof allows to obtain good lamination properties and degradation of chemical properties and mechanical properties of the polycarbonate resin may be effectively suppressed. In the present embodiment, the ratio of the constitutional unit derived from a lactone compound among aliphatic polyesters relative to the total constitutional units except for a terminal group is preferably 70 mol% or more, more preferably 80 mol% or more, still more preferably 90 mol% or more, furthermore preferably 95 mol% or more, and still furthermore preferably 99 mol% or more.

Examples of the lactone compound include ε-caprolactone, β-propionlactone, and δ-valerolactone, and ε-caprolactone is preferred. Alternatively, the lactone compound may be a copolymer of two or more of the lactone compounds.

It is preferable that the aliphatic polyester for use in the present embodiment is a polycaprolactone.

It is preferable that the weight average molecular weight of the aliphatic polyester compound for use in the present embodiment be 5000 to 90000. The weight average molecular weight is more preferably 7000 to 60000, and particularly preferably 8000 to 40000. With a weight average molecular weight controlled to the lower limit value or more, the film formability tends to be improved. With a weight average molecular weight controlled to the upper limit value or less, the lamination properties tend to be improved. Here, the weight average molecular weight is a value in terms of polystyrene measured by GPC (gel permeation chromatography) method.

In the case where the resin composition in the present embodiment contains an aliphatic polyester, the aliphatic polyester is contained in the resin composition preferably at a proportion of 0.5 % by mass or more, more preferably at a proportion of 1.0 % by mass or more, and still more preferably at a proportion of 2.0 % by mass or more. It is preferable that the resin composition in the present embodiment contain an aliphatic polyester at a proportion of 9.0 % by mass or less in the resin composition. With a proportion controlled to the lower limit value or more, the lamination properties tend to be improved. With a proportion controlled to the upper limit value or less, the formability during formation of a resin sheet tends to be improved.

In the present embodiment, the type of aromatic-based polyester is not particularly limited to a specific one, and a polyester (PCTG) containing a constitutional unit derived from terephthalic acid, a constitutional unit derived from ethylene glycol and a constitutional unit derived from cyclohexane dimethanol is preferred. The polyester (PCTG) is a thermoplastic resin excellent in compatibility with a polycarbonate resin, and addition thereof causes a small degradation of durability of the polycarbonate resin. Accordingly, use of the polyester allows to obtain a resin composition excellent in durability as well as lamination properties. The polyester (PCTG) is a polyester obtained by substituting a part of ethylene glycol as one of the starting material monomers of polyethylene terephthalate with cyclohexane dimethanol. In the present embodiment, relative to 100 mol% of the total of the constitutional unit derived from ethylene glycol and the constitutional unit derived from cyclohexane dimethanol, the ratio of the constitutional unit derived from cyclohexane dimethanol is preferably 50 mol% or more and less than 100 mol%, more preferably 60 to 90 mol%. The PCTG may contain a starting material monomer other than the constitutional unit derived from terephthalic acid, the constitutional unit derived from ethylene glycol, and the constitutional unit derived from cyclohexane dimethanol, without departing from the subject matter of the present embodiment. In the present embodiment, the PCTG has a total content of the constitutional unit derived from terephthalic acid, the constitutional unit derived from ethylene glycol, and the constitutional unit derived from cyclohexane dimethanol of preferably 90 mol% or more, more preferably 95 mol% or more, and still more preferably 99 mol% or more, relative to the total constitutional units except for a terminal group.

It is preferable that the intrinsic viscosity of the aromatic-based polyester compound for use in the present embodiment (IV value measured by a capillary viscometer: ISO 1628-1, 1998) be 0.5 to 1.0. The intrinsic viscosity is more preferably 0.6 to 0.9, and particularly preferably 0.7 to 0.8. With an intrinsic viscosity controlled to the ranges, the film formability tends to be further improved.

In the case where the resin composition in the present embodiment contains an aromatic-based polyester, in the resin composition, the aromatic-based polyester is contained preferably at a proportion of 10 % by mass or more, more preferably at a proportion of 20 % by mass or more, and still more preferably at a proportion of 30 % by mass or more. The resin composition in the present embodiment contains an aromatic-based polyester preferably at a proportion of 47.5 % by mass or less, more preferably at a proportion of 45 % by mass or less, and still more preferably at a proportion of 43 % by mass or less, in the resin composition. With an aromatic-based polyester proportion controlled to the lower limit value or more, the lamination properties are improved. With an aromatic-based polyester proportion controlled to the upper limit value or less, the formability during sheet formation tends to be improved.

<Blending ratio>

The resin composition in the present embodiment contains a polycarbonate resin in an amount of 30 to 95 parts by mass, and titanium oxide in an amount of 5 to 40 parts by mass (preferably 10 parts by mass or more, more preferably 20 parts by mass or more, and preferably 35 parts by mass or less). With a blending ratio controlled to the ranges, a resin sheet excellent in light shielding properties may be obtained. In particular, with a titanium oxide content controlled to 20 parts by mass or more, a resin sheet excellent in light shielding properties may be obtained even the thickness of the resin sheet is reduced. A polyester in an amount of 0.5 to 47.5 parts by mass (preferably 3.0 to 45 parts by mass) may be further contained. Such a blending ratio allows to obtain a resin sheet excellent in lamination properties. Further, an antioxidant, another colorant, an antistatic agent, and other components described below may be contained.

In the resin composition in the present embodiment, the difference in the content between the polycarbonate resin and titanium oxide (polycarbonate resin content - titanium oxide content) is preferably 10 parts by mass or more, and 90 parts by mass or less. With a difference controlled to the range, the film formability tends to be further improved.

In a first embodiment of the blending ratio of the resin composition in the present embodiment, 71 to 95 parts by mass of a polycarbonate resin, 5 to 20 parts by mass of titanium oxide, and 0 to 9 parts by mass (preferably 1 to 9 parts by mass) of a polyester (preferably an aliphatic polyester) are included. A resin sheet produced from the resin composition having such a blending may be suitably used for a reflection sheet, a card product, etc.

In a second embodiment of the blending ratio of the resin composition in the present embodiment, 41 to 79 parts by mass (preferably 58 to 73 parts by mass) of a polycarbonate resin, 20 to 40 parts by mass (preferably 25 to 35 parts by mass) of titanium oxide, and 0 to 9 parts by mass (preferably 1 part or more, more preferably 2 parts by mass or more) of a polyester (preferably an aliphatic polyester) are included. A resin sheet produced from the resin composition having such a blending may be suitably used for the white core layer of a card having a clear window. In particular, the resin composition in the present embodiment has a high dispersibility of titanium oxide, so that even an extremely thin resin sheet made therefrom is preferred, because it may achieve sufficient light shielding properties.

In a third embodiment of the blending ratio of the resin composition in the present embodiment, 32.5 to 85 parts by mass (preferably 35 to 55 parts by mass) of a polycarbonate resin, 5 to 20 parts by mass of titanium oxide, and 10 to 47.5 parts by mass (preferably 20 parts by mass or more) of a polyester (preferably an aromatic-based polyester) are included. A resin sheet produced from the resin composition having such a blending may be suitably used for a reflection sheet, a card product, etc.

It is preferable that the resin composition in the present embodiment satisfy the ratio relative to 100 parts by mass of the total of the polycarbonate resin, titanium oxide and a polyester compounded on an as needed basis.

Further, the resin composition in the present embodiment preferably has a polycarbonate resin content more than the polyester content, and preferably more than 1 part by mass or more. Further the upper limit value of the difference between the polycarbonate resin content and the polyester content is 76 parts by mass or less. With a difference controlled to the ranges, a thin resin composition more excellent in lamination properties tends to be obtained while maintaining the light shielding properties high.

For the resin composition in the present embodiment, only one or two or more types of respective polycarbonate resin, titanium oxide and polyester compounded on an as needed basis may be used. In the case of using two or more types, it is preferable that the total amount be in the ranges.

<Other colorants>

The resin composition in the present embodiment may include a colorant other than titanium oxide. Addition of another colorant allows to add some color to the resin composition, so that the appearance (design) of the resin sheet tends to be improved. In addition, it becomes possible to further improve the light shielding performance.

Examples of the other colorants include inorganic pigments, organic pigments, and organic dyes.

Examples of the inorganic pigments include sulfide-based pigments such as carbon black, cadmium red, and cadmium yellow; silicate-based pigments such as ultramarine blue; oxide-based pigments such as zinc flower, red iron oxide, chromium oxide, iron black, titanium yellow, zinc-iron-based brown, titanium cobalt-based green, cobalt green, cobalt blue, copper-chromium-based black, and copper-iron-based black; chromic acid-based pigments such as chrome yellow and molybdate orange; and ferrocyanide-based pigments such as Prussian blue.

Examples of the organic pigments and organic dyes include phthalocyanine-based dyes or pigments such as copper phthalocyanine blue and copper phthalocyanine green; azo-based dyes or pigments such as nickel azo yellow; condensed polycyclic dyes or pigments such as thioindigo-base, perinone-base, perylene-base, quinacridone-base, dioxazine-base, isoindolinone-base, and quinophthalone-base; and anthraquinone-based, heterocycle-based, or methyl-based dyes or pigments.

Specific examples of the other colorants include colorants having maximum absorption in the wavelength range of 450 to 650 nm. Blending a colorant having maximum absorption in the wavelength range of 450 to 650 nm to effectively absorb light in the vicinity of 550 nm as the wavelength that humans may sensitively perceive allows to improve the light shielding properties of the resin sheet.

Further, examples include an aspect in which the other colorant is a dye. Examples of the dye include a colorant having a maximum absorption in the wavelength range of 450 to 650 nm.

Also, specific examples of the other colorant include the carbon black described above. Blending carbon black allows to further improve the light shielding performance of the resin sheet.

In the case where the resin composition in the present embodiment contains the other colorant, the content thereof in the resin composition is preferably 5 ppm by mass or more, more preferably 7 ppm or more, still more preferably 10 ppm by mass or more, furthermore preferably 15 ppm by mass or more, and may be 20 ppm by mass or more. The upper limit value of the content of the other colorant is preferably 150 ppm by mass or less, more preferably 120 ppm by mass or less, still more preferably 100 ppm by mass or less, and furthermore preferably 80 ppm by mass or less. With a content controlled to the ranges, the appearance of the resulting resin sheet is further improved, and the light shielding performance tend to be further improved.

The resin composition in the present embodiment may contain only one type of other colorant, or may contain two or more types of other colorants. In the case where two or more types are contained, it is preferable that the total amount be within the range.

<Various additives>

The resin composition in the present embodiment may also contain various additives.

It is preferable that the resin composition in the present embodiment contain an antioxidant. The resin composition in the present embodiment contains an antioxidant preferably at a proportion of 0.01 to 0.2 % by mass, more preferably at a proportion of 0.02 to 0.1 % by mass in the resin composition. With an antioxidant being contained, thermal decomposition during processing may be suppressed, and a change in color tone and a decrease in melt viscosity tend to be prevented. The type of the antioxidant is not particularly specified, and examples thereof include a phosphite and a phosphonite, and a phosphite is preferred. The antioxidant may be referred to the description in paragraphs 0059 to 0061 of Japanese Patent Laid-Open No. 2018-090677, and the content thereof is incorporated in the present specification.

It is preferable that the resin composition in the present embodiment further contain an antistatic agent. The resin composition in the present embodiment contains an antistatic agent preferably at a proportion of 0.01 to 1.5 % by mass, more preferably at a proportion of 0.1 to 0.8 % by mass, in the resin composition. With use in the range, the dust adhesion prevention properties and the transportability tend to be further improved.

The type of antistatic agent is not particularly specified, and examples thereof include a phosphonium salt compound. Specific examples of the antistatic agent include the phosphonium salt compounds described in Japanese Patent Laid-Open No. 2016-108424 and International Publication No. WO 2020/122055, and the contents thereof are incorporated in the present specification.

The resin composition in the present embodiment may contain components other than the above. Examples of the other components include at least one additive selected from the group consisting of a heat stabilizer, a flame retardant, an auxiliary flame retardant, a ultraviolet absorbent, and a mold release agent. Further, a fluorescent whitening agent, an anti-fogging agent, a fluidity improving agent, a plasticizer, a dispersant, an antibacterial agent, an antiviral agent, etc. may be added as long as the desired many physical properties are not significantly impaired.

In the case where the other component is contained, the content thereof in the resin composition in the present embodiment is, for example, 0.001 % by mass or more, and for example, 5.0 % by mass or less, preferably 3.0 % by mass or less, and more preferably 1.0 % by mass or less, based on the mass of the resin composition

<Physical properties of resin composition>

The resin composition in the present embodiment is required to have excellent dispersibility of titanium oxide. The resin composition in the present embodiment has preferably 0 to 60 appearance defects in a seed form having a size of 0.1 mm or more included in 1 m$^2$ sheet face of the resin sheet having a thickness of 50 $\mu$m formed from the resin composition, more preferably 0 to 55 pieces, still more preferably 0 to 50 pieces, furthermore preferably 0 to 45 pieces, still furthermore preferably 0 to 41 pieces, and yet furthermore preferably 0 to 36 pieces.

Examples of the means for reducing the number of appearance defects in a seed form having a size of 0.1 mm or more observed by a light microscope include use of the specified titanium oxide, and examples of the means for further reduction include the use of a polycarbonate resin having a viscosity average molecular weight of 20000 to 35000 and the pulverization of titanium oxide. Further, controlling the extrusion conditions during melt-kneading (melting temperature, screw structure, screw rotation rate, and discharge rate) to appropriate ranges is also preferred.

The measurement of the number of appearance defects in a seed form is according to the following method described in Examples.

It is preferable that the resin composition in the present embodiment have a glass transition temperature measured by the method (DSC) specified in JIS K7121: 1987 of preferably 90°C or more, more preferably 110°C or more, still more preferably 130°C or more, furthermore preferably 140°C or more, and still furthermore preferably 145°C or more. With a glass transition temperature controlled to the lower limit value or more, the durability of the resin composition tends to be further improved. The glass transition temperature is preferably 160°C or less, more preferably 155°C or less. With a glass transition temperature controlled to the upper limit value or less, forming may be performed at a lower temperature.

Further, the resin composition in the present embodiment has a melt volume flow rate (MVR) value at 300°C and under a load of 1.2 kgf as measured according to JIS K7210 of preferably 2.0 cm$^3$/10 min or more, more preferably 3.0 cm$^3$/10 min or more. With a value controlled to the lower limit value or more, film forming tends to be further improved. The upper limit value of the MVR is preferably 20.0 cm$^3$/10 min or less, more preferably 15.0 cm$^3$/10 min or less, still more preferably 12.0 cm$^3$/10 min or less, furthermore preferably 10.0 cm$^3$/10 min or less, and still furthermore preferably 7.0 cm$^3$/10 min or less. With a value controlled to the upper limit value or less, the uniform dispersibility of the starting materials of the resin composition in an extruder tends to be improved, so that the amount of foreign materials caused by poor kneading of the starting materials tends to be further reduced.

The glass transition temperature and melt volume flow rate are measured according to the following description in Examples.

<Physical properties of resin sheet>

The resin sheet in the present embodiment is a resin sheet formed from the resin composition. The resin sheet in the present embodiment is preferably used as the constituent layer of a card. In other words, the resin composition in the present embodiment is suitably used as the resin composition for a card.

The resin sheet in the present embodiment has a lower limit value of the thickness of preferably 20 $\mu$m or more, more preferably 25 $\mu$m or more. The upper limit value of the thickness is preferably 2000 $\mu$m or less, more preferably 1500 $\mu$m or less. With a thickness controlled to the lower limit value or more, the light shielding performance of the resin sheet tend to be further improved. With a thickness controlled to the upper limit value or less, a resin sheet further excellent in the lamination properties is obtained.

Further, the resin sheet in the present embodiment may be an extremely thin resin sheet. The extremely thin resin sheet may be suitably used as the white core layer of a card having a clear window. In the case where the resin sheet is formed into extremely thin resin sheet, the thickness of the extremely thin sheet is preferably 200 $\mu$m or less, more preferably 180 $\mu$m or less, still more preferably 150 $\mu$m or less, furthermore preferably 120 $\mu$m or less, still furthermore preferably 100 $\mu$m or less, yet furthermore preferably 80 $\mu$m or less, and may be 70 $\mu$m or less or 60 $\mu$m or less.

It is preferable that the resin sheet in the present embodiment is excellent in light shielding properties. Specifically, the total light ray transmittance T is preferably 20% or less, preferably 15% or less, more preferably 12% or less, and still more preferably 10% or less. The lower limit value of the total light ray transmittance is preferably 0%, and may be 1% or more. The measurement of the total light ray transmittance T is according to the following method described in Examples.

The resin composition in the present embodiment has a surface roughness Ra of at least one face of preferably 0.4 $\mu$m or more, more preferably 0.5 $\mu$m or more, still more preferably 0.7 $\mu$m or more, and may have the surface roughness Ra of 0.9 $\mu$m or more, 1.0 $\mu$m or more, or 1.1 $\mu$m or more. With a surface roughness controlled to the lower limit value or more, the transportability and lamination properties of the sheet tend to be further excellent. Further, the upper limit value of the surface roughness Ra of at least one face is preferably 3.0 $\mu$m or less, more preferably 2.5 $\mu$m or less, and may have the surface roughness Ra of 2.0 $\mu$m or less, 1.8 $\mu$m or less, or 1.5 $\mu$m or less. With a surface roughness controlled to the upper limit value or less, the printing sharpness tends to be further improved.

Further, in the present embodiment, it is preferable that the surface roughness Ra of one face of the resin sheet be in the range (0.4 $\mu$m to 3.0 $\mu$m), and the surface roughness of another face be 0.4 $\mu$m to 1.9 $\mu$m. With such a configuration, the transportability and lamination properties of the resin sheet are more effectively exhibited.

Further, it is preferable that the resin sheet in the present embodiment has a surface roughness Ra of a first face in the range (0.4 $\mu$m to 3.0 $\mu$m), and a surface roughness of a second face have a surface roughness less than the surface roughness of the first face by preferably 0.1 to 2.5 $\mu$m (by preferably 0.1 to 0.5 $\mu$m, by more preferably 0.15 to 0.35 $\mu$m). With such a configuration, the transportability and lamination properties of the sheet tend to be further improved.

The surface roughness Ra is measured according to the following description in Examples.

<Production method of resin sheet>

As the method for producing the resin sheet in the present embodiment, a known method for processing a resin composition into a sheet may be adopted. Specific examples thereof include extrusion molding and solution cast molding, and extrusion molding is preferred. Examples of the extrusion molding include a method including the steps of feeding pellets, flakes or powder of the resin composition in the present embodiment into an extruder for melting and kneading, extruding the composition from a T-die or the like, and cooling and solidifying the resulting semi-molten sheet while compressing with rollers to form a sheet.

<Multilayered articles>

The multilayered article in the present embodiment has the resin sheet in the present embodiment.

The multilayered article in the present embodiment is favorably used as a multilayered article having a white core layer. As a specific example of the multilayered article, the constitution of a multilayered sheet described in International Publication No. WO 2018/163889 may be referred, and the content thereof is incorporated in the present specification.

In particular, the multilayered article in the present embodiment is at least one of the interlayer sheets made of the resin sheet in the present embodiment, preferably having at least one or more openings in the sheet face. Such an opening may be used, for example, as the clear window of a security card. Since the resin sheet in the present embodiment having even an extremely thin thickness is excellent in light shielding performance, even a multilayered article having a clear window may achieve sufficient light shielding performance.

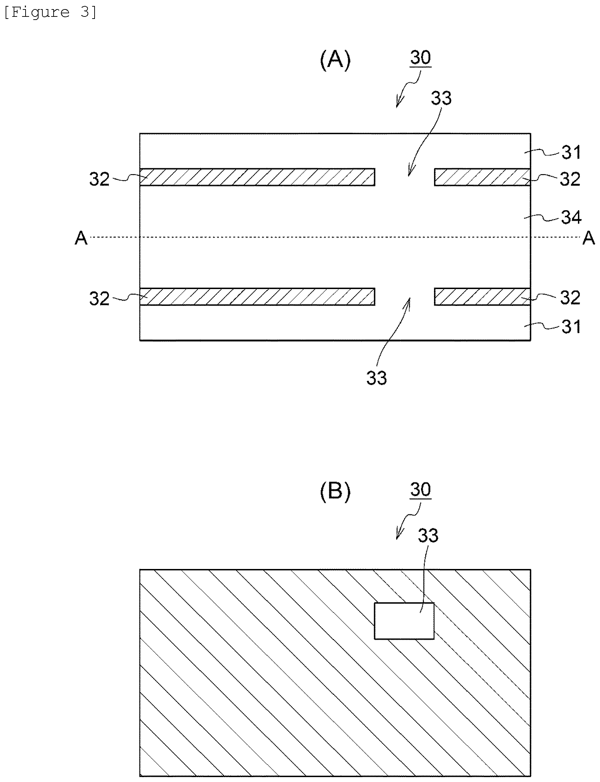

It is preferable that the multilayered article in the present embodiment contain preferably at least two resin sheets in the present embodiment, and in the cross-sectional direction of the multilayered article, two of the resin sheets be positioned symmetrically with respect to the central plane in the direction perpendicular to the thickness direction of the cross section. In particular, in an aspect in which the multilayered article in the present embodiment has, in the thickness direction of the cross section, an opening with absence of the resin sheet in the present embodiment, it is preferable that two of the resin sheets be positioned symmetrically with respect to the central plane in the direction perpendicular to the thickness direction of the cross section. As an example of such a multilayered article, the configuration is shown in Figure 3. Figure 3 (A) is a view seen from the cross-sectional direction (thickness direction) of the multilayered article, and Figure 3 (B) is a view seen from the plane direction of the multilayered article (sheet face of the resin sheet). In Figure 3, a multilayered article 30, an overlay layer (transparent resin sheet) 31, a white core layer (resin sheet in the present embodiment) 32, a clear window (opening) 33, a transparent core layer (transparent resin sheet) 34 are shown. A dotted line A-A shown in Figure 3 (A) corresponds to the central face position in the direction perpendicular to the thickness direction of the cross section of the multilayered article. The multilayered article shown in Figure 3 has a clear window (opening) 33 in a region with absence of the white core layer (resin sheet in the present embodiment) in the cross-sectional direction of the multilayered article. The white core layer (resin sheet in the present embodiment) 32 and the clear window (opening) 33 are positioned symmetrically with respect to the central face (the face passing through the dotted line A-A in Figure 3).

Further, in the multilayered article shown in Figure 3 viewed from the cross-sectional direction of the multilayered article shown in Figure 3 (A), only the white core layer 32 looks white, while viewed from the plane direction of the multilayered article shown in Figure 3 (B), the entire portions other than the clear window 33 look white due to the white core layer 32.

The multilayered article with the clear window 33 shown in Figure 3 can be produced by hot pressing the stack of the overlay layer 31, the white core layer 32, the transparent core layer 34, the white core layer 32, and the overlay layer 31. In other words, during hot pressing, a part of the transparent resin sheets enters (fills into) a portion (opening) of the white core layer 32 between the overlay layer 31 and the transparent core layer 34 so as to form the clear window. Of course, the multilayered article in the present embodiment can be produced by another method without departing from the subject matter of the present embodiment.

On the other hand, the transparent resin sheet that constitutes the overlay layer 31 and the transparent core layer 34 is formed from a composition containing a thermoplastic resin, including, for example, a resin composition to form the resin composition in the present embodiment from which titanium oxide is removed. Accordingly, a polycarbonate resin sheet is an example of the transparent resin sheet.

Further, the multilayered article shown in Figure 3 has a structure including the resin sheet (white core layer) 32 in the present embodiment, the transparent core layer (transparent resin sheet) 34, and the resin sheet (white core layer) 32 in the present embodiment (preferably continuously) laminated in this order, though other aspects are not excluded.

Furthermore, the multilayered article in the present embodiment is not limited to the layer structure shown in Figure 3. Accordingly, of course, the multilayered article shown in Figure 3 may also include another layer without departing from the subject matter of the present invention.

It is also preferable that the multilayered article in the present embodiment has, for example, at least one layer containing a laser coloring agent. The layer containing a laser coloring agent is preferably used as laser marking layer. It is preferable that the layer containing a laser coloring agent is provided further outside than the resin sheet in the present embodiment. In other words, examples thereof include an aspect in which the layer is provided more adjacent to the surface side than the white core layer 32 in Figure 3. As the laser coloring agent, a black colorant is preferred, and carbon black is more preferred. Further, a metal oxide-based laser marking agent may also be used. Details of the laser marking layer may be referred to the description in Japanese Patent Laid-Open No. 2020-75487, and the content thereof is incorporated in the present specification.

Examples of the multilayered article in the present embodiment include one having a layer containing a colorant that emits visible light by irradiation with UV light or infrared light. By having such a layer, the multilayered article may be used as a security card capable of determining authenticity. In other words, only a card that emits light when irradiated with predetermined light may be identified as true card.

In the present embodiment, the configuration may further include a layer containing a colorant that emits visible light having a wavelength different from that of the colorant that emits visible light by irradiation with UV light or infrared light. In this case, the layer containing a colorant that emits visible light and the layer containing a colorant that emits visible light having a wavelength different from that of the colorant that emits visible light may be different or the same. In other words, the present embodiment also includes an aspect in which two or more types of colorants that emit visible light and that emit visible light having different wavelengths are contained in the same layer.

In the multilayered article in the present embodiment, it is preferable that the layer containing a colorant that emits visible light be provided more outside than the resin sheet in the present embodiment. In other words, examples thereof include an aspect in which the layer is provided more adjacent to the surface than the white core layer 32 in Figure 3.

The layer containing a colorant that emits visible light may be referred to the description in Japanese Patent Laid-Open No. 2020-75487, and the content thereof is incorporated in the present specification.

The multilayered article in the present embodiment has a surface roughness Ra of preferably 0.1 μm or more, more preferably 0.5 μm or more, each. With a surface roughness controlled to the lower limit value or more, the transportability and lamination properties of the multilayered article tend to be further improved. Further, the upper limits of the surface roughness Ra on both sides of the multilayered article are preferably 3.5 μm or less, more preferably 3.2 μm or less, respectively. With a surface roughness controlled to the upper limit value or less, the printing sharpness tends to be further improved.

The thickness of the multilayered article in the present embodiment may be appropriately determined depending on the use, and the total thickness is preferably 0.2 mm or more, more preferably 0.3 mm or more. With a thickness controlled to the lower limit value or more, an IC chip and an antenna tend to be easily introduced. The upper limit of the total thickness is preferably 2.0 mm or less, more preferably 1.0 mm or less. With a thickness controlled to the upper limit value or less, the storage properties of a card tend to be further improved.

In the method for producing a multilayered article in the present embodiment, the adhesiveness between respective layers may be enhanced with an adhesive or the like without departing from the subject matter of the present embodiment, in addition to hot pressing constituent layers respectively which is abovementioned. Further, respective layers may be co-extruded into a sheet form.

<Use>

Subsequently, use of the resin sheet and the multilayered article in the present embodiment will be described. The resin sheet and/or multilayered article in the present embodiment is preferably used for a card containing these.

It is preferable that the card is a security card. Examples of the security card in the embodiment include an identification card (ID card), a passport, a driver's license, a bank card, a credit card, an insurance card, and other identification cards.

Further, in the present embodiment, the description in paragraphs 0048 to 0059 in Japanese Patent Laid-Open No. 2016-108424 and the description in paragraphs 0075 to 0088 in Japanese Patent Laid-Open No. 2015-168728 without departing from the subject matter of the present invention may be referred, and the content thereof is incorporated in the present specification.

[Examples]

Hereinafter, the present invention will be described in more specific with reference to Examples. The materials, amounts used, ratios, treatment contents, treatment procedures, etc. shown in the following Examples may be appropriately changed as long as not departing from the subject matter of the present invention. Accordingly, the scope of the present invention is not limited to the specific examples shown below.

In the case where the measurement instrument or the like used in Examples is hardly available due to discontinued production or the like, measurement may be performed using another instrument having the same performance.

1. Starting material

<Polycarbonate resin>

E-2000F: Bisphenol A polycarbonate resin produced by interfacial polymerization, lupilon (R), viscosity average molecular weight Mv: 28000, manufactured by Mitsubishi Engineering-Plastics Corporation.

<Titanium oxide>

PFC317: Rutile-type titanium oxide produced by treating the surface of titanium oxide particles with silica, alumina and siloxane in the above sequence, manufactured by Ishihara Sangyo Kaisha, Ltd., average primary particle size: 0.24 $\mu$m (240 nm)

PFC312: Rutile-type titanium oxide produced by treating the surface of titanium oxide particles with silica, alumina and siloxane in the above sequence, manufactured by Ishihara Sangyo Kaisha, Ltd., average primary particle size: 0.21 $\mu$m

PC-3: Rutile-type titanium oxide produced by treating the surface of titanium oxide particles with silica, alumina and siloxane in the above sequence, manufactured by Ishihara Sangyo Kaisha, Ltd., average primary particle size: 0.20 $\mu$m (200 nm)

<<Measurement method of average primary particle size>>

Titanium oxide was sputtered using a sputtering apparatus. Pt was used as target, and the coating time was set to 30 seconds. The titanium oxide subjected to the above sputtering treatment was observed and photographed using a field emission scanning electron microscope. The observation was performed under conditions at an acceleration voltage of 5 kV and an observation magnification of 35000 times. The total of the major axis and the minor axis of titanium oxide was measured for the resulting image using an image analysis software, and the sum thereof divided by 2 was determined as the particle diameter. The particle size was measured for 50 or more particles, and the average value thereof was calculated.

The measurements were performed by three experts in the same manner, respectively, and the resulting average value was determined as the average primary particle size.

A sputtering apparatus E-1030 manufactured by Hitachi High-Tech Corporation was used. A field emission scanning electron microscope FE-SEM (SU8220, manufactured by Hitachi High-Tech Corporation) was used. An image analysis software WinROOF2013 (manufactured by Mitani Corporation) was used.

<Polyester>

H1P: Polycaprolactone (PCL), Placcel (R) manufactured by Daicel Corporation, weight average molecular weight: 10000

PCTG: Polyester composed of terephthalic acid, ethylene glycol and cyclohexane dimethanol, manufacturer: SK Chemicals Co., Ltd., product number: J2003, intrinsic viscosity: 0.75

<Antioxidant>

AS2112: manufactured by ADEKA Corporation, tris(2,4-di-tert-butylphenyl)phosphite

S-9228PC: manufactured by Dover Chemical Corporation, bis(2,4-dicumylphenyl)pentaerythritol diphosphite

PEP-36: manufactured by ADEKA Corporation, 3,9-bis(2,6-di-tert-butyl-4-methylphenoxy)-2,4,8,10-tetraoxa-3,9-diphosphaspiro[5,5]undecane

<Antistatic agent>

Trihexyltetradecyl phosphonium=bis(trifluoromethanesulfonyl)amide: manufactured by MERCK & Co., Ltd, CAS No. 460092-03-9

<Other colorants>

Carbon Black M280: MONARCH280 manufactured by Cabot Corporation

Dye 1: Macrolex BlueRR, colorant having maximum absorption in the wavelength range of 450 to 650 nm

Dye 2: Macrolex Violet3R, colorant having maximum absorption in the wavelength range of 450 to 650 nm

2. Examples 1 to 8 and Comparative Examples 1 and 2

<Production of resin pellet>

Each of the components was blended in a tumbler so as to obtain the composition shown in the following Table 1 or 2 (the content is shown in parts by mass in each table), and the mixture was fed into the root of a twin-screw extruder (TEX30$\alpha$, manufactured by The Japan Steel Works, Ltd.). The melt-kneading was performed at a cylinder temperature of 280°C in Examples and Comparative Examples except for Examples 3 and 4, and at a cylinder temperature of 260°C in Examples 3 and 4 to produce pellets.

<Melt volume flow rate (MVR) of resin composition>

The melt volume flow rate was measured according to JIS K7210.

Specifically, the melt volume flow rate (unit: $cm^3/10$ min) was measured based on the amount of resin extruded per 10 minutes from a standard die installed at the bottom of the cylinder under a load of 1.2 kgf applied at 300°C. The pellets except for in Examples 3 and 4 were heat-dried in a hot air oven at 120°C for 4 hours before the measurement. The pellets in Examples 3 and 4 were heat-dried in a hot air oven at 90°C for 6 hours.

<Glass transition temperature of resin composition>

The glass transition temperature was measured by the method (DSC) specified in JIS K7121: 1987.

Specifically, about 10 mg of a sample was heated from 30°C to 260°C at a heating rate of 20°C/min under a nitrogen atmosphere using a differential scanning calorimeter. After holding the temperature for 5 minutes, the sample was cooled to 30°C at a rate of 30°C/min. The temperature was held at 30°C for 10 minutes, and raised again to 260°C at a rate of 10°C/min. The glass transition temperature (unit: °C) was determined based on the extrapolated glass transition initiation temperature calculated from the DSC curve obtained by the second temperature raise.

As the differential scanning calorimeter, a differential scanning calorimeter EXSTAR DSC7020 manufactured by Hitachi High-Tech Science Corporation was used.

<Al content and Si content>

X-ray fluorescence analysis was performed. The total amount of Al, Si, Ti and Zr which are detected elements was taken as 100%, and based on the mass proportion of each element, quantification was performed by the fundamental parameter (FP) method. For each sample, the measurement was performed at the same spot 3 times to calculate the average value. The measurement conditions were as follows.

[Analysis conditions]

Spectroscopy: energy dispersive X-ray spectroscopy (ED-XRF) X-ray tube: Rh
X-ray detector: silicon drift detector (SDD)
Energy resolution: full width at half maximum of Mn, about 150 eV
Beam diameter: about 1.2 mm
Tube voltage: 30 kV

X-ray fluorescence analyzer XGT7200V (manufactured by HORIBA, Ltd.) was used.

Based on the results obtained from the above, a difference between the Si content measured by X-ray fluorescence (XRF) analysis and the Si content measured by X-ray fluorescence (XRF) analysis after firing at 700°C for 2 hours ($\Delta$Si), and a mass ratio (Si/Al) between the Si content and the alumina content measured by X-ray fluorescence (XRF) analysis after firing at 700°C for 2 hours were calculated.

<Production of resin sheet>

From the resulting pellets, a resin sheet was produced by the following method.

Using a T-die extruder for molding molten film, composed of a twin-screw extruder with a barrel diameter of 32 mm and a screw having a ratio L/D (length/diameter) of 31.5, the pellets were formed into a resin sheet having a width of 300 mm at a discharge rate of 20 kg/h and a screw rotation rate of 200 rpm. The cylinder/T-die temperature was set to 280°C, and the extruded molten sheet was nipped with a first cooling roller made of silicone rubber having a diameter of 250 mm and a 10-point average roughness Rzjis (JIS B0601: 2013) of 21 $\mu$m, and a second cooling roller made of embossed metal having a diameter of 250 mm and a 10-point average roughness Rzjis (JIS B0601: 2013) of 18 $\mu$m. Subsequently, the sheet having an embossed pattern on the surface was further passed through a third cooling roller made of metal with a mirror surface, and a resin sheet having a thickness (average thickness) shown in Tables 1 and 2 was formed while the sheet was drawn with a draw roller. On this occasion, the temperature of the first cooling roller was set to 50°C, the temperature of the second and third cooling rollers was set to 120°C in Examples and Comparative Examples except for Examples 3 and 4, and set to 90°C in Examples 3 and 4.

<Dispersibility (number of agglomerates)>

In order to obtain the composition shown in Table 1 and Table 2 (the content is shown in parts by mass in each table), mixing was performed with a tumbler for 15 minutes. Then, the mixture was melt-kneaded with a twin-screw extruder equipped with vent at a cylinder temperature of 280°C and subjected to strand cutting to obtain pellets. The resulting pellets were dried under the following conditions and then made into a resin sheet having a thickness of 50 $\mu$m with a T-die melt extruder composed of a single-screw extruder equipped with vent with a barrel diameter of 100 mm and a screw having a ratio L/D of 32 under conditions at a discharge rate of 150 kg/h and a screw rotation rate of 40 rpm. As the rollers for molding, a first cooling roller made of silicone rubber having a 10-point average roughness Rzjis (JIS B0601: 2013) of 21 μm, and a second cooling roller made of embossed metal having a 10-point average roughness Rzjis (JIS B0601: 2013) of 18 μm were used. On this occasion, molding was performed with the first cooling roller at a temperature of 50°C, and the second and third cooling rollers at the following temperature conditions.

The resin sheet made by the method described above was subjected to visual inspection for counting the number of appearance defect in a seed form having a size of 0.1 mm or more along a length of 3 m. The size refers to the longest length of a portion of appearance defect in a seed form. The evaluation was performed by five experts, and the average value was round off to an integer.

<Conditions for drying pellets>

Except for Examples 3 and 4: heat drying with a hot air oven at 120°C for 4 hours.
Examples 3 and 4: heat drying with a hot air oven at 90°C for 6 hours.

<Cylinder/die temperature>

Except for Examples 3 and 4: set to 280°C
Examples 3 and 4: set to 260°C

<Temperature of Second and third rollers>

Except for Examples 3 and 4: set to 120°C
Examples 3 and 4: set to 90°C

<Measurement of total light ray transmittance>

The total light ray transmittance was measured according to ISO-13468-1 (measurement conditions: D65 light source, field of view: 10°) .
In the measurement, a haze meter HM-150 manufactured by Murakami Color Research Laboratory was used.
The unit of total light ray transmittance is shown in %.

<Surface roughness (Ra) of resin sheet>

The surface roughness (measurement conditions: λc=0.8, λs=2.5) was measured at optional three positions on the surface of the resulting resin sheet according to ISO 4287: 1997, and the surface roughness (Ra) was calculated based on the average at the three positions. The unit is shown in μm.
In the measurement, a small surface roughness measuring instrument Surftest SJ-210 manufactured by Mitutoyo Corporation was used.

<Surface resistivity>

The antistatic properties of the resin composition in Example 5 were evaluated as follows.
After leaving a resin sheet to be measured under conditions at a temperature of 23°C and a relative humidity of 50% for 24 hours or more, a DC voltage of 1000 V was applied for 300 seconds with a resistivity meter to measure the surface resistivity (unit: Ω/sq.) at 5 places, and the average value thereof was calculated.
The surface resistivity of the front face of the resin sheet in Example 5 was $2.0 \times 10^{13}$ Q/sq., and the surface resistivity of the rear face was $4.0 \times 10^{12}$ Ω/sq.
The surface resistivity was measured with Hiresta UP MCP-HT450 (manufactured by Mitsubishi Chemical Analytech Co., Ltd.) with a URS probe.

[Table 1]

| | | Example 1 | Example 2 | Example 3 | Example 4 | Example 5 |
|---|---|---|---|---|---|---|
| Polycarbonate resin | E-2000F | 85 | 70 | 78 | 45 | 85 |
| Titanium oxide | PFC317 | 15 | 30 | 15 | 15 | 15 |
| | PFC312 | | | | | |
| | PC-3 | | | | | |
| Polyester | H1P | | | | | |
| | PCTG | | | | 40 | |
| Antioxidant | AS2112 | 0.05 | 0.05 | 0.05 | 0.05 | |
| | S-9228PC | | | | | 0.05 |
| | PEP-36 | | | | | |
| Colorant | Carbon black M280 | | | | | |
| | Dye 1 | | | | | |
| | Dye 2 | | | | | |
| Antistatic agent | Trihexyltetradecyl phosphonium = bis (trifluoromethanesulfonyl) amide | | | | | 0.4 |
| MVR | $cm^3$/10min | 5 | 5 | 9 | 13 | 6 |
| Glass transition temperature | °C | 150 | 150 | 110 | 100 | 148 |
| XRF Al amount | % by mass | 1.9 | 1.9 | 1.9 | 1.9 | 1.9 |
| XRF Si amount | % by mass | 1.4 | 1.4 | 1.4 | 1.4 | 1.4 |
| XRF Si amount before firing) | % by mass | 1.9 | 1.9 | 1.9 | 1.9 | 1.9 |
| XRF ΔSi | % by mass | 0.5 | 0.5 | 0.5 | 0.5 | 0.5 |
| XRF Si/Al | Mass proportion | 0.74 | 0.74 | 0.74 | 0.74 | 0.74 |
| Average primary particle size | μm | 0.24 | 0.24 | 0.24 | 0.24 | 0.24 |
| Dispersion | Appearance defect in seed form [pieces/$m^2$] | 33 | 47 | 39 | 42 | 38 |
| Total light ray transmittance [%] | | 8.5 | 2.6 | 8.9 | 9.2 | 8.6 |
| Thickness of sheet in measurement of total light ray transmittance [μm] | | 100 | 100 | 100 | 100 | 100 |
| Ra [μm] | Front face | 1.3 | 1.4 | 1.3 | 1.3 | 1.3 |
| | Rear face | 1.1 | 1.1 | 1.1 | 1.1 | 1.1 |

[Table 2]

| | | Example 6 | Example 7 | Example 8 | Comparative Example 1 | Comparative Example 2 |
|---|---|---|---|---|---|---|
| Polycarbonate resin | E-2000F | 85 | 85 | 70 | 85 | 85 |
| Titanium oxide | PFC317 | 15 | 15 | 30 | | |
| | PFC312 | | | | 15 | |
| | PC-3 | | | | | 15 |
| Polyester | H1P | | | | | |
| | PCTG | | | | | |
| Antioxidant | AS2112 | | | | 0.05 | 0.05 |
| | S-9228PC | | | | | |
| | PEP-36 | 0.05 | | | | |
| Colorant | Carbon black M280 | | 0.001 | | | |
| | Dye 1 | | | 0.001 | | |
| | Dye 2 | | | 0.001 | | |
| Antistatic agent | Trihexyltetradecyl phosphonium = bis (trifluoromethanesulfonyl) amide | | | | | |
| MVR | $cm^3/10min$ | 5 | 5 | 5 | 5 | 5 |
| Glass transition temperature | °C | 150 | 150 | 150 | 150 | 150 |
| XRF Al amount | % by mass | 1.9 | 1.9 | 1.9 | 1.8 | 2.3 |
| XRF Si amount | % by mass | 1.4 | 1.4 | 1.4 | 1.5 | 2.8 |
| XRF Si amount (before firing) | % by mass | 1.9 | 1.9 | 1.9 | 1.6 | 3 |
| XRF ⊿Si | % by mass | 0.5 | 0.5 | 0.5 | 0.1 | 0.2 |
| XRF Si/Al | Mass proportion | 0.74 | 0.74 | 0.74 | 0.83 | 1.22 |
| Average primary particle size | μm | 0.24 | 0.24 | 0.24 | 0.21 | 0.20 |
| Dispersion | Appearance defect in seed form [pieces/$m^2$] | 31 | 32 | 45 | 85 | 82 |

(continued)

| | | Example 6 | Example 7 | Example 8 | Comparative Example 1 | Comparative Example 2 |
|---|---|---|---|---|---|---|
| Total light ray transmittance [%] | | 17 | 7.8 | 8.8 | 8.6 | 8.6 |
| Thickness of sheet in measurement of total light ray transmittance [μm] | | 50 | 100 | 50 | 100 | 100 |
| Ra [μm] | Front face | 1.3 | 1.3 | 1.3 | 1.3 | 1.3 |
| | Rear face | 1.1 | 1.1 | 1.1 | 1.1 | 1.1 |

[Reference Signs List]

10, 20, 30: MULTILAYERED ARTICLE (SECURITY CARD)
11, 21, 31: OVERLAY LAYER (TRANSPARENT RESIN SHEET)
12, 22, 32: WHITE CORE LAYER
13: CORE LAYER
23: TRANSPARENT RESIN SHEET
24: CLEAR WINDOW
25: OPENING (REGION ABSENT FROM WHITE CORE LAYER)
33: CLEAR WINDOW (OPENING)
34: TRANSPARENT CORE LAYER (TRANSPARENT RESIN SHEET)

**Claims**

1. A resin composition comprising a polycarbonate resin in an amount of 30 to 95 parts by mass, and titanium oxide in an amount of 5 to 40 parts by mass,

   wherein the titanium oxide has an average primary particle size of 0.22 to 0.26 $\mu$m based on measurement of an image observed by a scanning electron microscope (SEM), and
   wherein the titanium oxide has an Si content of 1.0 to 1.8 % by mass and an Al content of 1.6 to 2.2 % by mass based on measurement by X-ray fluorescence (XRF) analysis after firing at 700°C for 2 hours.

2. The resin composition according to claim 1, wherein the titanium oxide has an organic substance layer on a surface.

3. The resin composition according to claim 1 or 2, wherein the titanium oxide has a difference between the Si content measured by X-ray fluorescence (XRF) analysis and the Si content measured by X-ray fluorescence (XRF) analysis after firing at 700°C for 2 hours of 0.3 to 0.8 % by mass.

4. The resin composition according to any one of claims 1 to 3, wherein the titanium oxide has a mass ratio (Si/Al) between the Si content and the Al content measured by X-ray fluorescence (XRF) analysis after firing at 700°C for 2 hours of 0.5 to 1.0.

5. The resin composition according to any one of claims 1 to 4, further comprising a polyester at a proportion of 0.5 to 47.5 parts by mass.

6. The resin composition according to claim 5, wherein the polyester comprises a constitutional unit derived from a lactone compound.

7. The resin composition according to claim 5 or 6, wherein the polyester comprises a constitutional unit derived from terephthalic acid, a constitutional unit derived from ethylene glycol, and a constitutional unit derived from cyclohexane dimethanol.

8. The resin composition according to any one of claims 1 to 7, wherein the content of the titanium oxide is 20 to 40 parts by mass.

9. The resin composition according to any one of claims 1 to 8, further comprising a colorant other than titanium oxide at a proportion of 5 to 150 ppm by mass in the resin composition.

10. The resin composition according to claim 9, wherein the other colorant comprises a colorant having a maximum absorption in the wavelength range of 450 to 650 nm.

11. The resin composition according to claim 9, wherein the other colorant comprises carbon black.

12. The resin composition according to claim 9 or 10, wherein the other colorant comprises a dye.

13. The resin composition according to any one of claims 1 to 12, further comprising an antioxidant at a proportion of 0.01 to 0.2 % by mass in the resin composition.

14. The resin composition according to any one of claims 1 to 13, further comprising an antistatic agent.

15. The resin composition according to any one of claims 1 to 14, being used for a card.

16. A resin sheet formed from a resin composition according to any one of claims 1 to 15.

17. The resin sheet according to claim 16, having a thickness of 20 to 2000 μm.

18. The resin sheet according to claim 16 or 17, having a total light ray transmittance of 0 to 20%.

19. The resin sheet according to any one of claims 16 to 18, wherein at least one of faces of the resin sheet has a surface roughness Ra of 0.4 to 3.0 μm.

20. The resin sheet according to any one of claims 16 to 19, wherein the resin sheet has a first face with a surface roughness Ra of 0.4 to 3.0 μm and a second face with a surface roughness smaller than a surface roughness of the first face by 0.1 to 2.5 μm.

21. A multilayered article comprising the resin sheet according to any one of the claims 16 to 20.

22. The multilayered article according to claim 21, having a total thickness of 0.2 to 2.0 mm.

23. The multilayered article according to claim 21 or 22, having at least one layer comprising a laser coloring agent.

24. The multilayered article according to any one of claims 21 to 23, further comprising a layer containing a colorant that emits visible light by irradiation with UV light or infrared light.

25. The multilayered article according to claim 24, further comprising a layer containing a colorant that emits visible light having a wavelength different from that of the colorant that emits visible light, by irradiation with UV light or infrared light.

26. A card comprising the resin sheet according to any one of claims 16 to 20, or the multilayered article according to any one of claims 21 to 25.

27. The card according to claim 26, which is a security card.

[Figure 1]

EP 4 201 672 A1

(A)                                                                          (B)

EP 4 201 672 A1

[Figure 2]

(A)                    (B)                    (C)

[Figure 3]

(A) <u>30</u>

33

32

31

32

34

A — — — — — — — — — — — — A

32

32

31

33

(B) <u>30</u>

33

## INTERNATIONAL SEARCH REPORT

| International application No. |
|---|
| **PCT/JP2021/027661** |

### A. CLASSIFICATION OF SUBJECT MATTER

*B32B 27/20*(2006.01)i; *B32B 27/36*(2006.01)i; *C08L 67/00*(2006.01)i; *C08L 69/00*(2006.01)i; *C08J 5/18*(2006.01)i; *B42D 25/30*(2014.01)i; *C08K 3/04*(2006.01)i; *C08K 3/22*(2006.01)i
FI: C08L69/00; C08K3/22; C08K3/04; C08L67/00; B32B27/20 A; B32B27/36 102; C08J5/18 CFD; B42D25/30

According to International Patent Classification (IPC) or to both national classification and IPC

### B. FIELDS SEARCHED

Minimum documentation searched (classification system followed by classification symbols)

B32B27/20; B32B27/36; C08L67/00-67/04; C08L69/00; C08J5/18; B42D25/30; C08K3/04; C08K3/22

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2004-083904 A (ISHIHARA SANGYO KAISHA, LTD.) 18 March 2004 (2004-03-18) claims, paragraph [0035], example 7 | 1-27 |
| A | JP 2006-321918 A (TEIJIN CHEMICALS LTD.) 30 November 2006 (2006-11-30) | 1-27 |
| A | JP 2006-182896 A (SAKAI CHEMICAL INDUSTRY CO., LTD.) 13 July 2006 (2006-07-13) | 1-27 |
| A | JP 2004-161888 A (IDEMITSU PETROCHEMICAL CO., LTD.) 10 June 2004 (2004-06-10) | 1-27 |
| A | JP 2020-079341 A (TEIJIN LTD.) 28 May 2020 (2020-05-28) | 1-27 |
| A | WO 2009/139535 A1 (CHEIL INDUSTRIES INC.) 19 November 2009 (2009-11-19) | 1-27 |
| P, X | JP 6871464 B1 (MITSUBISHI GAS CHEMICAL CO., INC., MGC FILSHEET CO., LTD.) 12 May 2021 (2021-05-12) claims | 1-27 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 September 2021** | **05 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2021/027661**

| Patent document cited in search report | | | Publication date (day/month/year) | Patent family member(s) | | | Publication date (day/month/year) |
|---|---|---|---|---|---|---|---|
| JP | 2004-083904 | A | 18 March 2004 | US | 2005/0228112 | A1 | |
| | | | | claims, paragraph [0034], example 7 | | | |
| | | | | WO | 2004/024832 | A1 | |
| | | | | EP | 1541638 | A1 | |
| | | | | CA | 2494787 | A1 | |
| | | | | KR | 10-2005-0056193 | A | |
| | | | | CN | 1681894 | A | |
| | | | | TW | 200404045 | A | |
| | | | | AU | 2003257813 | A | |
| JP | 2006-321918 | A | 30 November 2006 | US | 2009/0118406 | A1 | |
| | | | | WO | 2006/123833 | A1 | |
| | | | | EP | 1882718 | A1 | |
| | | | | KR | 10-2008-0007615 | A | |
| | | | | CN | 101180363 | A | |
| | | | | TW | 200704709 | A | |
| JP | 2006-182896 | A | 13 July 2006 | (Family: none) | | | |
| JP | 2004-161888 | A | 10 June 2004 | US | 2005/0272857 | A1 | |
| | | | | WO | 2004/044044 | A1 | |
| | | | | KR | 10-2005-0086558 | A | |
| | | | | CN | 1711315 | A | |
| | | | | TW | 200415199 | A | |
| | | | | KR | 10-1120898 | B1 | |
| JP | 2020-079341 | A | 28 May 2020 | (Family: none) | | | |
| WO | 2009/139535 | A1 | 19 November 2009 | US | 2011/0060084 | A1 | |
| | | | | KR | 10-0905089 | B1 | |
| | | | | CN | 102027065 | A | |
| JP | 6871464 | B1 | 12 May 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018163889 A
- JP 2012144604 A
- JP 2019002023 A
- JP 2018090677 A
- JP 2016108424 A
- WO 2020122055 A
- JP 2020075487 A
- JP 2015168728 A

**Non-patent literature cited in the description**

- *CHEMICAL ABSTRACTS,* 460092-03-9